# EUROPÄISCHE PATENTANMELDUNG

(11) **EP 1 624 447 A2**
(43) Veröffentlichungstag der Anmeldung: **08.02.2006**
(21) Anmeldenummer: 05105074.8
(22) Anmeldetag: 09.06.2005
(51) Int. Cl.: G10L 15/24

(54) **Haushaltsgerät mit Bilderfassungseinrichtung**

(30) Priorität: 09.06.2004 DE 102004028082
(71) Anmelder: BSH Bosch und Siemens Hausgeräte GmbH, 81739 München (DE)
(72) Erfinder: Laaser, Walter, 93164 Laaber (DE)

(57) **Zusammenfassung**

Haushaltgerät mit einer Funktionseinrichtung (10), mit einer Steuerungseinrichtung (14) und mit einer Bilderfassungseinrichtung (18) zum Erfassen eines Bildsignals (PS), welches gegenüber herkömmlichen Haushaltgeräten im Hinblick auf Barrierefreiheit weiterentwickelt ist, wobei das Gerät mit einer Erkennungseinrichtung (22) zur Verarbeitung und Auswertung eines Bildsignals (PS) ausgestattet ist, um hieraus eine vom Bediener gesprochene Lautfolge zu erkennen.

## Beschreibung

Die Erfindung betrifft ein Haushaltgerät mit einer zu bedienenden Funktionseinrichtung, einer Steuerungseinrichtung zum Steuern der Funktionseinrichtung und einer Bilderfassungseinrichtung.

In jedem Haushalt findet sich heutzutage eine Vielfalt unterschiedlicher Haushaltgeräte: Backofen, Kühlschrank, Mikrowellengerät, Kochfeld, Geschirrspüler, Waschmaschine, Gefriergerät, Wäschetrockner usw. Herkömmlich werden diese Geräte über Schalter bedient; im Haushaltbereich weit verbreitet sind beispielsweise Drehschalter oder Drehknopfschalter, über die etwa bei einer Waschmaschine das Programm oder bei einem Kochfeld die Heizstufe eingestellt wird.

Die ausschließliche Bedienung von Haushaltgeräten über Schalter stellt jedoch für viele Menschen ein Problem dar, so etwa für ältere Personen, deren Sehkraft und/oder motorische Fähigkeiten nachgelassen haben, oder für körperlich behinderte Menschen. Für diesen Personenkreis werden seit einiger Zeit sogenannte barrierefreie Haushaltgeräte entwickelt: Diese Geräte sind so ausgelegt, dass der tägliche Umgang mit ihnen für ältere oder behinderte Menschen vereinfacht wird.

Es sind bereits entsprechend weiterentwickelte Haushaltgeräte bekannt, bei denen die Bedienung über Schalter durch Verfahren der Spracherkennung ergänzt oder sogar ersetzt wird. Die Spracherkennungstechnologie stammt aus dem Computer- und PC-Bereich. Dort wird die Eingabe von Informationen über ein Keyboard in den Computer, beispielsweise von Befehlen bzw. Kommandos, durch die Eingabe von Sprachkommandos ersetzt. Zum Erkennen gesprochener Worte verfügt der Computer über einen Vorrat abgespeicherter Lautmuster, sogenannter Phoneme, die jeweils mehrere Worte, ein einzelnes Wort oder auch Teile eines Wortes repräsentieren. Durch Vergleich der mittels Mikrofon aufgenommenen Signale bzw. Signalformen mit den gespeicherten Signalformen der Phoneme können die eingesprochenen Kommandos erkannt und umgesetzt werden.

Nachteilig an den gegenwärtig verfügbaren Spracherkennungssystemen ist jedoch erstens der hohe Aufwand an erforderlichem Speicher und an Verarbeitungskapazität, der zur Durchführung der Erkennung erforderlich ist. Trotz hohen Aufwandes ist zweitens die Erkennungsgenauigkeit häufig nicht optimal, d. h. Kommandos werden entweder gar nicht oder aber falsch erkannt. Viele potenzielle Anwendungsbereiche der Spracherkennung sind aus letzterem Grunde bisher noch nicht mit entsprechenden Systemen ausgerüstet: Kaum ein Benutzer bzw. Bediener würde es für akzeptabel halten, wenn sein Haushaltgerät ein gesprochenes Kommando regelmäßig erst beim dritten oder vierten Mal erkennt, oder gar statt des gewünschten Vorganges einen völlig anderen Vorgang ausführt.

Die US 6,243,683 B1 offenbart ein Verfahren und eine Vorrichtung zur Verwendung eines Bilderfassungssystems, um ein Spracherkennungssystem zu steuern. Hierbei erkennt das Bilderfassungssystem eine Geste, die ein Bediener vor der Kamera des Systems ausführt, und steuert daraufhin in entsprechender Weise das Spracherkennungssystem, in dem es das System bspw. einschaltet. Eine Anwendung im Küchenbereich wird in der Druckschrift vorgeschlagen. Ein derartiges Verfahren bzw. System ermöglicht es, auf einfache Weise das Spracherkennungssystem ein- bzw. auszuschalten, und dadurch zu verhindern, dass das System in völlig anderem Zusammenhang ausgesprochene Worte fälschlicherweise als Kommando interpretiert. Jedoch wird das Bilderfassungssystem nicht benutzt, um die Erkennungsgenauigkeit des aktivierten Systems zu erhöhen.

Darüber hinaus stellt die Spracherkennung nicht in jedem Falle die optimal geeignete Ergänzung oder Ersetzung von Schaltern zur erleichterten Bedienbarkeit eines Haushaltgerätes dar. Dies gilt beispielsweise für Menschen, die aufgrund einer Krankheit oder Behinderung zu exakter und deutlicher Artikulation nur begrenzt in der Lage sind, oder für Menschen, die gar nicht sprechen können, also etwa stumme / taubstumme Personen.

Daher besteht eine Aufgabe der vorliegenden Erfindung darin, ein Haushaltgerät vorzuschlagen, das gegenüber herkömmlichen Haushaltgeräten im Hinblick auf Barrierefreiheit weiterentwickelt ist, wobei zusätzlich oder alternativ zur Bedienung über Schalter zuverlässige, für den Bediener einfach anzuwendende Bedieneinrichtungen vorgesehen sind.

Diese Aufgabe wird durch ein Haushaltgerät mit den Merkmalen des Anspruchs 1 oder 12 sowie ein Verfahren zur Steuerung eines derartigen Haushaltgerätes mit den Merkmalen des Anspruchs 13 oder 20 gelöst.

Eine wesentliche Idee der Erfindung besteht darin, die Bedienung des Haushaltgerätes dadurch zu erleichtern, dass neben einer Bilderfassungseinrichtung weiterhin eine Erkennungseinrichtung vorgesehen wird, die in der Lage ist, vom Bediener gesprochene Worte bzw. Lautfolgen zu erkennen. Gleiches geschieht bei Gesprächen zwischen Menschen: Hierbei wird das Verständnis der gesprochenen Sprache durch Lippenlesen sowie auch Mimik und Gestik verbessert. Geübten Personen ist es sogar möglich, nur durch Lippenablesen die gesprochenen Worte des Gegenübers zu erfassen. Gemäss der Erfindung kann dieses bei einem Haushaltgerät alternativ oder ergänzend zu einem herkömmlichen Spracherkennungssystem geschehen, so dass die Abhängigkeit von der fehlerbehafteten Spracherkennung mindestens verringert wird.

Im einzelnen weist ein Haushaltgerät mit einer zu bedienenden Funktionseinrichtung weiterhin eine Steuerungseinrichtung auf, welche Steuerbefehle vom Bediener entgegennimmt, bspw. in herkömmlicher Weise über Schalter, und in Reaktion hierauf die Funktionseinrichtung steuert. Ferner liegt eine Bilderfassungseinrichtung zum Erzeugen eines Bildsignals vor, das ein Bild eines Bedieners oder eines Ausschnitts davon repräsentiert Gemäß der Erfindung weist ein derartiges Haushaltgerät eine Erkennungseinrichtung zur Verarbeitung und Auswertung des Bildsignals auf, die aus dem Bildsignal eine vom Bediener gesprochene Lautfolge erkennt und einen Steuerbefehl bestimmt, welcher die erkannte Lautfolge repräsentiert. Die Erkennungseinrichtung gibt diesen Steuerbefehl an die Steuerungseinrichtung aus.

In einer bevorzugten Ausführungsform ist die Erkennungseinrichtung eines erfindungsgemäßen Haushaltgerätes mit einer Lippenbewegung-Erfassungseinheit zur Verarbeitung des Bildsignals ausgerüstet, die eine Lippenposition sowie eine Lippenbewegung des Bedieners erfasst. Die Lippenbewegung-Erfassungseinheit identifiziert also in einer bildlichen Repräsentation des Gesichtsbereiches des Bedieners die Position der Lippen und erfasst sodann die Bewegung der Lippen, die beispielsweise bei der Bildung von Vokalen wie "a" oder "o" in charakteristischer Weise geformt sind, wobei die Lippenbewegung bei allen Menschen beim Bilden gleicher Laute weitgehend übereinstimmt.

In dieser bevorzugten Ausführungsform weist die Erkennungseinrichtung weiterhin eine Auswerteeinheit auf, die eine Lautfolge aufgrund der erfassten Lippenbewegung bestimmt und hieraus den Steuerbefehl bestimmt. Wird also beispielsweise ein "a" oder "o" bzw. eine aneinandergereihte Folge von Lauten erkannt, wird diese in der Auswerteeinheit in Form eines Textstrings zusammengestellt, und der sich ergebende Steuerbefehl an die Steuerungseinrichtung des Haushaltgerätes übermittelt. In der Steuerungseinrichtung wird sodann der Steuerbefehl ausgewertet, und beispielsweise festgestellt, ob es sich hierbei um ein zulässiges Kommando handelt.

In weiteren bevorzugten Ausführungsformen eines erfindungsgemäßen Haushaltgerätes weist dieses eine Spracheingabeeinrichtung zur Eingabe eines Sprachsignals eines Bedieners auf, wobei die Erkennungseinrichtung zur Verarbeitung und Auswertung des Sprach- und des Bildsignals ausgebildet ist, und aus dem Sprachsignal und dem Bildsignal eine Lautfolge bestimmt, die der vom Bediener gesprochene Lautfolge wenigstens nahekommt. Ein derartiges Haushaltgerät ist also sowohl mit einer herkömmlichen Spracherkennungsfunktion als auch der erfindungsgemäßen, bildgestützten Erkennungsfunktion ausgerüstet. Es kann die häufig fehlerhafte Erkennungsgenauigkeit eines herkömmlichen Spracherkennungssystems durch Kombination mit Bilderkennung erhöht werden. Dabei kann ein erfindungsgemäßes Haushaltgerät die Erkennungsgenauigkeit der Spracherkennung durch Lippenlesen erhöhen, d. h. durch Erfassen und Verarbeiten der Lippenbewegung des Bedieners.

In weiteren Ausgestaltungen weist die Erkennungseinrichtung eines erfindungsgemäßen Haushaltgerätes eine Auswerteeinheit mit einer Sprach-Lautbestimmungseinheit zur Verarbeitung des Sprachsignals auf, die aus dem Sprachsignal eine erste Lautfolge bestimmt. Weiterhin weist die Auswerteeinheit eine Lippen-Lautbestimmungseinheit zur Verarbeitung der Lippenbewegung auf, die aus der Lippenbewegung eine zweite Lautfolge bestimmt. Es erfolgt also die Spracherkennung bzw. das Lippenlesen zunächst getrennt voneinander.

Weiterhin weist die Auswerteeinheit eine Vergleichereinheit auf, welche zur Bestimmung des Steuerbefehls die erste und die zweite Lautfolge vergleichend auswertet. Fehlerhafte Erkennung der Sprache des Bedieners führt dann dazu, dass die erste und die zweite Lautfolge sich voneinander unterscheiden. Durch an sich bekannte Verfahren, die beispielsweise auf syntaktischen und/oder grammatikalischen Regeln basieren oder auch auf Listen möglicher Kommandos, die etwa in der Auswerteeinheit in maschinenlesbarer Form vorliegen können, kann aus der ersten und der zweiten Lautfolge durch vergleichende Auswertung mit hoher Sicherheit, d. h. Zuverlässigkeit die vom Bediener gesprochene Lautfolge ermittelt werden.

Alternativ zu der vorstehend geschilderten Ausführungsform kann die Erkennungseinrichtung eine Auswerteeinheit mit einer gemeinsamen Lautbestimmungseinheit zur gemeinsamen Verarbeitung des Sprachsignals und der bestimmten Lippenbewegung aufweisen, die aus dem Sprachsignal und der Lippenbewegung eine Lautfolge und aus dieser den Steuerbefehl bestimmt. In diesem Falle erfolgt der Vergleich der mittels Spracheingabeeinrichtung bzw. Bilderfassungseinrichtung gewonnenen Signale bereits in einem sehr frühen Stadium des Erkennungsverfahrens. Ist beispielsweise aus der erfassten Lippenbewegung festzustellen, dass der Bediener einen bestimmten Vokal ausgesprochen hat, kann die Identifizierung der Lautfolge oder des Phonems aus dem Sprachsignal in entsprechender Weise eingeschränkt werden.

Ein weiterer wesentlicher Gedanke der Erfindung besteht darin, ein Haushaltgerät mit einer Steuerungseinrichtung und einer Bilderfassungseinrichtung, wie oben geschildert, auszurüsten, und ferner eine Erkennungseinrichtung vorzusehen, die zur Verarbeitung und Auswertung des Bildsignals ausgebildet ist, um hieraus eine vom Bediener durchgeführte Geste zu erkennen. Weiterhin ist die Erkennungseinrichtung zum Bestimmen eines Steuerbefehl, welcher die erkannte Geste repräsentiert, sowie zu dessen Ausgabe an die Steuerungseinrichtung ausgebildet. Um die Gestenerkennung zu unterstützen, ist die Erkennungseinrichtung zur Verarbeitung und Auswertung des Bildsignals auch dahingehend ausgebildet, um hieraus eine Kopfhaltung und/oder Miene des Bedieners zu erfassen, und um einen weiteren Steuerbefehl zu bestimmen, welcher die erfasste Miene und/oder Kopfhaltung repräsentiert.

Ein derartiges Haushaltgerät kann in einer Ausgestaltung beispielsweise zur Erkennung der Taubstummensprache ausgebildet sein und ist somit besonders für Bediener geeignet, die nicht sprechen können. Entsprechend kann die Gesten- und Mimikerkennung alternativ oder aber auch ergänzend zu einem herkömmlichen Spracherkennungssystem (mit / ohne Lippenlesen) installiert sein.

In weiteren Ausführungsformen eines derartigen, erfindungsgemäßen Haushaltgerätes weist die Erkennungseinrichtung eine Gesten-Erfassungseinheit zur Verarbeitung des Bildsignals auf, die eine Geste eines Bedieners erfasst. Das Bildsignal kann hier bspw. aus zwei Teilsignalen bestehen, die durch zwei verschiedene Bilderfassungseinrichtungen erfasst werden. So kann etwa eine Kamera auf das Gesicht des Bedieners gerichtet sein, und eine weitere Kamera auf einen Bereich, in dem sich die Hand des Bedieners befindet. Hierbei kann die Spracherkennung mittels Sprach- und/oder Bildsignal (d. h. etwa Lippenlesen) alternativ oder in Ergänzung durch die Gestenerkennung unterstützt werden.

In einer weiteren Ausgestaltung dieser Ausführungsform ist die Erkennungseinrichtung um eine Gesten-Auswerteeinheit ergänzt, die aus der erfassten Geste einen zweiten Steuerbefehl bestimmt. Dieser zweite Steuerbefehl kann entweder mit dem aus der Sprach-/ Bilderkennung resultierenden Steuerbefehl verglichen werden, oder kann unabhängig davon eine weitere Steuerung des Haushaltgerätes veranlassen.

Der erkannte Steuerbefehl kann auf ein Ausgabegerät, insbesondere ein Anzeigefeld des Haushaltgerätes, ausgegeben werden. Hierdurch wird dem Bediener die Möglichkeit gegeben, die Erkennung seiner mittels Sprache und/oder Lippenformung und/oder Gesten eingegebenen Kommandos zu kontrollieren.

Des weiteren weist das Haushaltgerät eine Bestätigungseinrichtung zur Bestätigung und/oder Ablehnung des ausgegebenen Steuerbefehls auf. Somit kann der Bediener einen falsch erkannten Steuerbefehl ablehnen bzw. einen richtig erkannten Steuerbefehl bestätigen.

In einer weiteren Ausführungsform weist die Erkennungseinrichtung weiterhin eine Mimik-Erfassungseinheit zur Verarbeitung des Bildsignals auf, die eine Kopfhaltung und/oder Miene des Bedieners erfasst. Hierdurch wird dem Bediener eine weitere Möglichkeit gegeben, über das ohnehin vorhandene System der Bilderfassungseinrichtung Kommandos auf einfache Weise einzugeben. Es kann sich hierbei beispielsweise um eine Bestätigung eines zuvor auf andere Weise eingegebenen Kommandos handeln. In einer Ausgestaltung dieser Ausführungsform weist die Erkennungseinrichtung ferner eine Mimik-Auswerteeinheit auf, die aus der erfassten Kopfhaltung und/oder Miene einen dritten Steuerbefehl bestimmt.

Wird etwa ein zuvor auf andere Weise erkanntes Kommando auf ein Anzeigefeld des Haushaltgerätes ausgegeben, besteht also die Möglichkeit, beispielsweise durch Kopfnicken oder Kopfschütteln weitere Reaktionen des Haushaltgerätes auszulösen bzw. zu steuern. Der Bediener kann also auf einfache Weise (durch ein Kopfschütteln) veranlassen, dass das Haushaltgerät ein falsch erkanntes Kommando nicht ausführt, sondern verwirft oder eine erneute Eingabe anfordert.

Ein Verfahren zur Steuerung eines erfindungsgemäßen Haushaltgerätes, bei dem ein Bildsignal erzeugt wird, das ein Bild eines Bedieners oder eines Ausschnitts davon repräsentiert, weist die folgenden Schritte auf:
a) aus dem Bildsignal wird eine vom Bediener ausgesprochene Lautfolge erkannt,
b) ein die Lautfolge repräsentierender erster Steuerbefehl wird bestimmt,
c) der erste Steuerbefehl wird zur Steuerung einer Funktionseinrichtung des Haushaltgerätes verwendet.

In einer Ausgestaltung dieses Verfahrens wird aus dem Bildsignal die Lippenposition sowie die Lippenbewegung des Bedieners erfasst und aus der Lippenbewegung eine Lautfolge erkannt.

Wird zusätzlich zum Bildsignal ein Sprachsignal erfasst, kann das Sprach- und das Bildsignal ausgewertet werden, so dass eine vom Bediener gesprochene Lautfolge erkannt und/oder die Erkennung unterstützt wird. Durch die Kombination von Spracherkennung (Verarbeitung eines akustischen Signals) mit Lippenbewegungserkennung bzw. Lippenlesen (Verarbeitung eines optischen Signals, das mit dem akustischen Signal im Zusammenhang steht) werden mehr Informationen herangezogen, um auf das gesprochene Wort zu schließen, wodurch die Rate an Fehl-Erkennungen gesenkt werden kann.

In einer Ausgestaltung der geschilderten Verfahren kann ein aus dem ersten Steuerbefehl resultierendes Erkennungsergebnis dem Bediener angezeigt werden.

Des weiteren kann der Bediener durch Betätigen einer Bestätigungseinrichtung des Haushaltgerätes den ausgegebenen ersten Steuerbefehls bestätigen oder ablehnen. Somit kann der Bediener im Falle eines falsch erkannten ersten Steuerbefehls diesen verwerfen.

In weiteren Ausführungsformen wird das Bildsignal derart verarbeitet, dass aus dem Bildsignal eine Kopfhaltung und/oder Miene des Bedieners erfasst wird. In einem weiteren Verfahrensschritt wird dann ein die erfasste Kopfhaltung und/oder Miene repräsentierender zweiter Steuerbefehl bestimmt und der zweite Steuerbefehl wird zur Steuerung der Funktionseinrichtung des Haushaltgerätes verwendet.

Diese Schritte können beispielsweise nach einem durch kombinierte Sprach/Bilderkennung eingegebenen Kommando durchgeführt werden, wobei dann der zweite Steuerbefehl zur Bestätigung bzw. zum Verwerfen des richtig bzw. falsch erkannten ersten Steuerbefehl verwendet wird. Ebenso kann aber auch im Grundzustand des Haushaltgerätes die Sprach-/Lippenerkennung ausgeschaltet sein und lediglich eine Mimikerkennung aktiv sein. Der Benutzer kann dann beispielsweise durch ein Kopfnicken das System aktivieren. In diesem Falle erfolgt die Eingabe und Erkennung einer Mimik des Bedieners vor der Eingabe von Kommandos mittels Sprach/Bilderkennung. In gleicher Weise können auch Gesten zum Ein- bzw. Ausschalten des Haushaltgerätes bzw. der erfindungsgemäßen Erkennungseinrichtung verwendet werden.

In einer weiteren Ausgestaltung dieses Verfahren wird der erste Steuerbefehl zur Steuerung der Funktionseinheit verwendet, nachdem das resultierende Erkennungsergebnis dem Bediener angezeigt worden ist. Der zweite Steuerbefehl wird danach erkannt und dahingehend ausgewertet, dass er mit dem ersten Steuerbefehl übereinstimmt.

Ein erfindungsgemäßes Verfahren zur Steuerung eines Haushaltgerätes, dessen Erkennungseinrichtung zur Verarbeitung und Auswertung von Gesten und Mimik des Bedieners ausgebildet ist, und bei dem Bildsignale erzeugt werden, die jeweils ein Bild eines Bedieners repräsentieren, weist die folgenden Schritte auf:
a) ein erstes Bildsignal wird verarbeitet, aus dem eine Geste des Bedieners erfasst wird,
b) ein die Geste repräsentierender erster Steuerbefehl wird bestimmt,
c) ein zweites Bildsignal wird verarbeitet, aus dem eine Kopfhaltung und/oder Miene des Bedieners erfasst wird,
d) ein die erfasste Kopfhaltung und/oder Miene repräsentierender zweiter Steuerbefehl wird bestimmt,
e) der erste und der zweite Steuerbefehl werden zur Steuerung des Haushaltgerätes verwendet.

Vorteilhafterweise sind bei diesem Haushaltgerät keine Einrichtungen zur akustischen Signalaufnahme und -verarbeitung erforderlich, dennoch kann die Kommandoerkennung mit hoher Zuverlässigkeit erfolgen, in dem beispielsweise die Gesten- und Mimikerkennung redundant zusammenwirken.

Weitere Vorteile und Zweckmäßigkeiten der Erfindung ergeben sich aus der nachfolgenden Beschreibung von Ausführungsbeispielen der Erfindung, die anhand der folgenden Figuren beschrieben werden. Von diesen zeigt:
- Figur 1: ein schematisiertes Blockschaltbild eines erfindungsgemäßen Haushaltgerätes;
- Figur 2: in Form eines schematisierten Schaltbildes mit Funktionsblöcken ein Beispiel der in einer Erkennungseinrichtung eines erfindungsgemäßen Haushaltgerätes vorliegenden Erkennungsfunktionalitäten;
- Figur 3a: ein schematisiertes Blockschaltbild der Funktionalitäten einer Ausführungsform einer Erkennungseinrichtung eines erfindungsgemäßen Haushaltgerätes mit einer Kombination von Spracherkennung und Lippenablesen;
- Figur 3b: eine alternative Ausführungsform der Auswerteeinheit der Erkennungseinrichtung der Figur 3a);
- Figur 4: in Form eines schematisierten Blockschaltbildes eine weitere Ausführungsform der Erkennungseinrichtung eines erfindungsgemäßen Haushaltgerätes mit einer Kombination aus Spracherkennung, Lippenablesen und Mimikerkennung;
- Figur 5: in Form eines schematisierten Blockschaltbildes den funktionalen Aufbau eines erfindungsgemäßen Haushaltgerätes mit einem Bussystem, dass zur Spracherkennung, zum Lippenablesen und zur Gestenerkennung ausgebildet ist.

In der nachfolgenden Beschreibung werden gleiche und gleichwirkende Teile mit denselben Bezugsziffern bezeichnet.

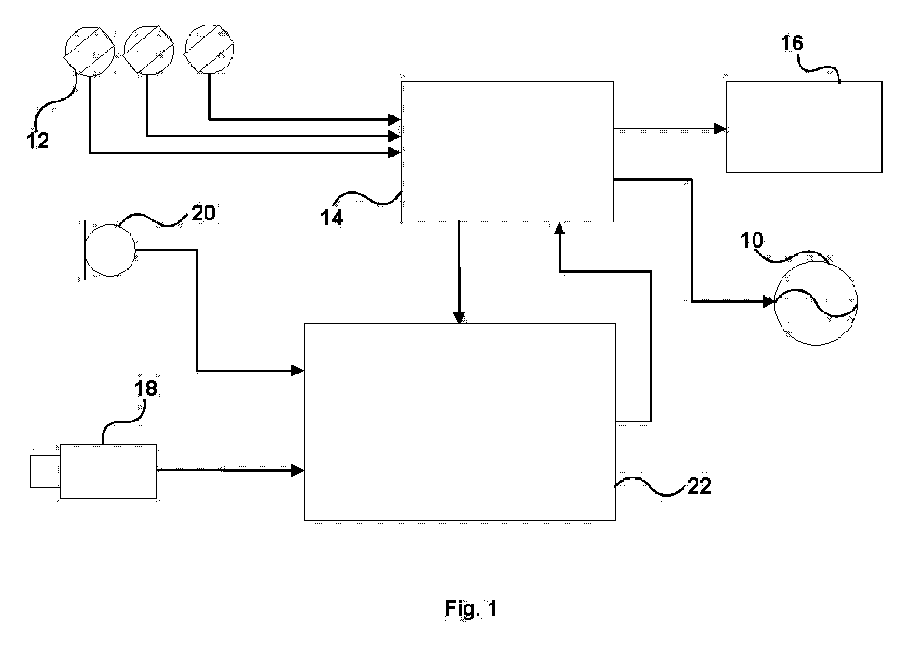

Den prinzipiellen Aufbau eines erfindungsgemäßen Haushaltgerätes zeigt Fig. 1. Das Gerät weist mindestens eine Funktionseinrichtung 10 auf, bei der es sich beispielsweise um ein Kochfeld eines Kochherdes, die Heizeinrichtung für einen Back-/ Garraum eines Ofens, die Waschtrommel inklusive Motor einer Waschmaschine oder dergleichen Einrichtung handeln kann. Herkömmlich werden derartige Funktionseinrichtungen über Bedienelemente 12 bedient, also beispielsweise Drehschalter und/oder Tasten. Über die Bedienelemente 12 eingegebene Kommandos werden in Form von Steuerbefehlen an eine zentrale Steuerung 14 des Haushaltgerätes übermittelt, die in Reaktion auf diese Kommandos bzw. Steuerbefehle die Funktionseinrichtung 10 steuert.

Das Haushaltgerät verfügt ferner über ein Anzeigefeld 16, auf dem etwa Uhrzeit, Status der Funktionseinrichtung und das zuletzt eingegebene Kommando angezeigt werden kann. Ferner verfügt das Haushaltgerät über eine Bilderfassungseinrichtung bzw. Kamera 18. Diese muss nicht fest an dem Haushaltgerät angebracht sein, sondern kann sich beispielsweise abgesetzt von dem Gerät befinden und mit dem Haushaltgerät über eine Kabelverbindung verbunden sein. Derartige Anordnungen sind aus dem PC-Bereich bekannt (Webcam).

Ohne das dies in der Fig. 1 oder den folgenden Abbildungen explizit illustriert ist, soll zu einer Bilderfassungseinrichtung auch die Digitalisierung eines erfassten Bildsignals in einer Form verstanden werden, die die Weiterverarbeitung des Bildsignals in weiteren Einrichtungen des Haushaltgerätes erlaubt.

Ist ein Haushaltgerät neben dem Lippenlesen auch zu Erkennung von Gesten ausgerüstet (s.u.), ist es ebenso denkbar, dass statt einer Kamera 18 deren zwei installiert sind; beispielsweise kann eine Kamera in Kopfhöhe des Bedieners (zur Erfassung des Gesichtsbereiches) und eine Kamera auf Brust- oder Hüfthöhe angebracht sein, um eine mit der Hand ausgeführte Geste des Bedieners zu erfassen.

Die Kamera 18 kann für die Erkennung und Weiterverarbeitung der Lippenbewegung eines Bedieners, wie auch zur Gestenerkennung und/oder zur Erkennung der Mimik des Bedieners ausgelegt sein, wie unten im Detail erläutert wird.

Weiterhin verfügt das Haushaltgerät der Fig. 1 über eine Spracheingabeeinrichtung bzw. ein Mikrofon 20. Auch dieses kann abgesetzt von dem Haushaltgerät angeordnet sein, und beispielsweise integral in dem abgesetzten Gehäuse einer Kamera 18 integriert sein. Die Spracheingabeeinrichtung soll stets auch eine Einheit (nicht gezeigt) zur Digitalisierung des erfassten Sprachsignals umfassen, so dass die Weiterverarbeitung des Signal in weiteren Einrichtungen des Haushaltgerätes ermöglicht wird.

Die von Kamera 18 und Mikrofon 20 erfassten Signale werden einer Erkennungseinrichtung 22 des Haushaltgerätes zugeführt. Der funktionale Aufbau dieser Erkennungseinrichtung 22 wird anhand der nachfolgenden Figuren detailliert geschildert. Hat die Erkennungseinrichtung 22 ein oder mehrere Kommandos erkannt, die der Bediener ausgesprochen und/oder durch Lippenbewegung, mittels Gestik oder Mimik dem Gerät eingegeben hat, so wird dieses an die zentrale Steuerung 14 gegeben. Diese verarbeitet den von der Erkennungseinrichtung 22 übermittelten Steuerbefehl in herkömmlicher Weise, um die Funktionseinrichtung 10 des Haushaltgerätes zu steuern. Die Steuerung 14 steuert auch die Erkennungseinrichtung 22, in dem sie beispielsweise Spracherkennung, Lippenablesen, und Gestenerkennung aktiviert oder deaktiviert oder aber in Reaktion auf ein eingegebenes Kommando steuert.

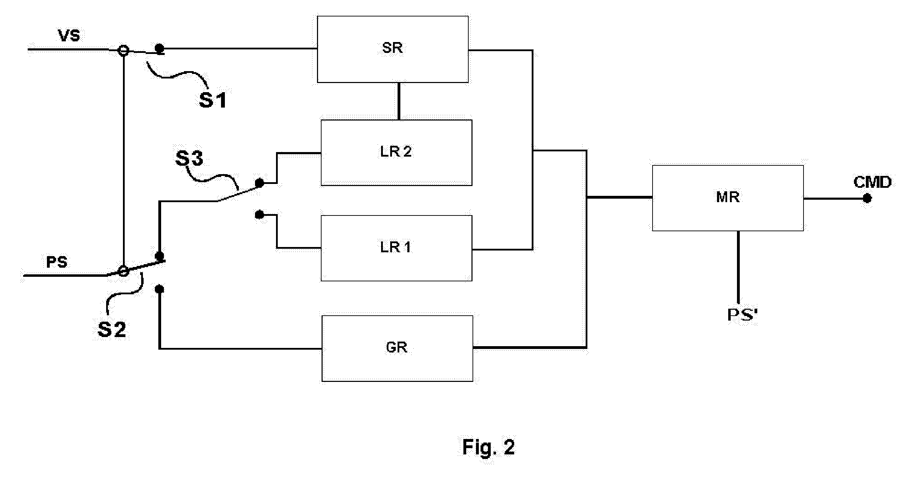

Ein beispielhaftes Organisationsprinzip einer Erkennungseinrichtung eines erfindungsgemäßen Haushaltgerätes ist schematisch in der Fig. 2 dargestellt. Hierbei ist der Signalweg von der Eingabe des Sprachsignals VS bzw. Bildsignals PS über die Verarbeitung bis zur Ausgabe des erkannten Kommandos CMD schematisch dargestellt. Alternative Verarbeitungswege sind durch logische Schalter S1 - S3 angedeutet. Diese müssen nicht in Form tatsächlicher Schalter ausgeführt sein, sondern versinnbildlichen die Aktivierung oder Deaktivierung von in Software ausgeführten Routinen der Spracherkennung SR, des Lippenablesens LR1 und LR2, der Gestenerkennung GR und der Mimikerkennung MR. Diese De/aktivierung kann beispielsweise durch die zentrale Steuerung 14 (s. Fig. 1) durchgeführt werden.

Bezogen auf die Darstellung der Fig. 2, gibt ein Bediener ein Kommando mittels gesprochener Worte bzw. Lautfolgen ein. Die Lautfolge wird in Form eines Sprachsignals VS von der Spracheingabeeinrichtung aufgenommen und mittels Spracherkennung SR verarbeitet, sofern der Schalter S1 geschlossen ist, eine Signalweiterleitung zur Spracherkennung SR also möglich ist.

Gleichzeitig mit der Erfassung des Sprachsignals VS wird der Gesichtsbereich des Bedieners von der Bilderfassungseinrichtung bildlich erfasst, mit anderen Worten, es gelangt ein Bildsignal PS an den Schalter S2. Befindet sich der Schalter S2 in der Position, die die Signalübertragung an die Funktionseinheiten zum Lippenlesen LR1 / LR2 ermöglicht (wie in Fig. 2 dargestellt), wird die Position der Lippen in der bildlichen Repräsentation bestimmt und die Bewegung der Lippen erfasst.

In Fig. 2 ist das Lippenlesen auf zwei verschiedenen Wegen möglich, durch den Schalter S3 gesteuert. Beim Lippenlesen LR1 erfolgt die Erkennung einer Lautfolge zunächst völlig unabhängig von der Spracherkennung SR. Die beiden, jeweils für sich erkannten, aus Spracherkennung SR und LR1 resultierenden Lautfolgen müssen in einem Vergleicher verglichen werden (nicht gezeigt), um zu einem zuverlässigen Erkennungsergebnis zu gelangen; dies wird weiter unten noch genauer ausgeführt.

Beim Lippenlesen LR2 arbeiten Spracherkenner SR und Lippenerkenner direkt, beispielsweise auf Phonembasis, zusammen und bestimmen gemeinsam das Wort bzw. die Lautfolge mit der höchsten Wahrscheinlichkeit. Das Ergebnis wird dann in der oben geschilderten Weise weiterverarbeitet. Es wird also ein internes Signal, das die bestimmte Lippenbewegung angibt, vom Lippenerkenner LR2 unmittelbar an den Spracherkenner SR übermittelt. Dieses interne Signal geht in Form einer Randbedingung, beispielsweise als Abfolge von Vokalen, die in dem erkanntem Phonem auftreten müssen, in die Spracherkennung SR ein.

Das Erkennungsergebnis wird auf ein Anzeigefeld ausgegeben (nicht angezeigt), so dass der Benutzer das erkannte Kommando CMD ablesen kann. Sodann wird vom Benutzer die Eingabe einer Bestätigung mittels mimischen Ausdrucks erwartet, beispielsweise in Form eines Kopfnickens. Hierzu wird ein weiteres Bildsignal PS' erfasst und der Mimikerkennung zugeführt MR. Erst dann wird das zuvor mittels Spracherkennung und Lippenlesen erkannte Kommando CMD ausgegeben.

Befindet sich der logische Schalter S2, gesteuert durch die zentrale Steuerung des Haushaltgerätes, in der nicht in Fig. 2 gezeigten Position, sind Spracherkennung SR und Lippenablesen LR1 / LR2 deaktiviert (die Schalter S1 und S2 sind miteinander gekoppelt, wie in Fig. 2 angedeutet). Ein Bildsignal PS wird statt an die Lippenlese-Funktionalität an die Gestenerkennung GR übermittelt. Der Benutzer kann eine Geste vollführen, die durch die Gestenerkennung GR des Haushaltgerätes erkannt wird.

Die Gestenerkennung GR kann bspw. dafür verwendet werden, um Spracherkennung SR und Lippenablesen LR1/LR2 zu aktivieren, kann aber auch Spracherkennung SR und Lippenablesen LR1/LR2 vollständig ersetzen. Hierdurch wird es Taubstummen ermöglicht, auf bequeme Weise mittels Gestensprache (d. h. Taubstummensprache) das Haushaltgerät zu bedienen. Auch hier kann, wie in Fig. 2 dargestellt, zur Vermeidung von Fehlbedienungen der Gestenerkennung GR eine Mimikerkennung MR nachgeschaltet sein, so dass eine erkannte Geste, umgesetzt in einen Steuerbefehl, als Kommando CMD auf der Anzeige ausgegeben wird. Das Kommando wird erst ausgeführt, wenn es durch eine vorgegebene Mimik des Bedieners bestätigt wird.

Der Fachmann erkennt, dass Abweichungen von dem in Fig. 2 gezeigten Organisationsschema in vielfältiger Weise möglich sind. So kann beispielsweise eine Mimikerkennung MR der Spracherkennung SR und dem Lippenablesen LR1/LR2 und/oder der Gestenerkennung GR vorgeschaltet sein, um das Haushaltgerät einzuschalten und/oder die weiteren Erkennungsfunktionalitäten einzuschalten. Ebenso ist es auch denkbar, dass statt der Mimikerkennung MR die Gestenerkennung GR zur Bestätigung von vorher auf andere Weise eingegebenen Kommandos verwendet wird. Weiterhin ist es auch denkbar, zur Bestätigung eingegebener und erkannter Kommandos das gleiche Erkennungsverfahren zu verwenden, sodass beispielsweise eine mittels Taubstummensprache eingegebene Geste zur Bedienung des Haushaltgerätes durch eine weitere, bestätigende Geste bestätigt werden muss, bevor das entsprechende Kommando zur Ausführung kommt. Diese und weitere zweckmäßige Ausführungsformen können prinzipiell mit einer einzigen Bilderfassungseinrichtung bzw. Kamera 18 (s. Fig. 1) durchgeführt werden, oder können mittels mehrerer Kameras durchgeführt werden. Ein Mikrofon ist nur dann erforderlich, wenn eine Spracherkennungsfunktion implementiert ist.

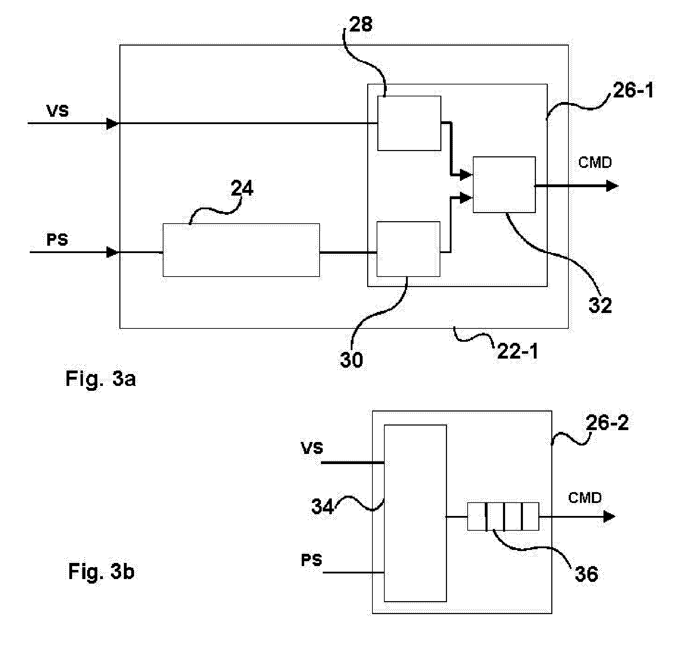

In der Fig. 3a) ist schematisch der funktionale Aufbau einer Ausführungsform einer Erkennungseinrichtung 22-1 eines erfindungsgemäßen Haushaltgerätes dargestellt, vgl. Fig. 1. Ein Sprachsignal VS und ein Bildsignal PS werden der Erkennungseinrichtung 22-1 eingegeben. Das Bildsignal PS gelangt zu einer Lippenbewegung-Erfassungseinheit 24, in der eine bildliche Darstellung des Gesichts des Bedieners verarbeitet wird, um in einem ersten Schritt die Position der Lippen in dem Bild zu bestimmen, und in einem zweiten Schritt die Bewegung der Lippen in dem weiter oben angegebenen Sinne zu erfassen.

Das Ergebnis der Erfassung - ein Signal, welches eine bestimmte erfasste Lippenbewegung repräsentiert - wird zusammen mit dem Sprachsignal VS einer Auswerteeinheit 26-1 eingegeben. In der in Fig. 3a) dargestellten Ausführungsform liegt jeweils eine unabhängige Lautbestimmungseinheit vor, d. h. eine Sprach-Lautbestimmungseinheit 28 zur Verarbeitung des Sprachsignals VS und eine Lippen-Lautbestimmungseinheit 30 zur Verarbeitung des die Lippenbewegung repräsentierenden Ausgangssignals der Lippenbewegung-Erfassungseinheit 24.

Im Falle der Lautbestimmungseinheit 28 wird das eingegebene Sprachsignal VS verarbeitet, in dem die Wellenform des Sprachsignals mit gespeicherten Wellenformen verglichen wird. Den gespeicherten Wellenformen (nicht dargestellt) ist ein Laut bzw. eine Lautfolge, beispielsweise ein Phonem, eindeutig zugeordnet. Der jenige Laut, bzw. diejenige Lautfolge, deren abgespeicherte Wellenform die größte Übereinstimmung mit dem Sprachsignal VS aufweist, wird als Erkennungsergebnis der Lautbestimmungseinheit 28 ausgegeben.

Die Spracherkennung kann in der Lautbestimmungseinheit 28 entweder sprecherunabhängig durchgeführt werden, d. h. die abgespeicherten Signalwellenformen sind diejenigen eines durchschnittlichen Sprechers. In diesem Falle liegt ein vollständiger Wortschatz, beispielsweise betreffend den Kommando- bzw. Befehlssatz des Haushaltgerätes, bereits bei der Auslieferung des Gerätes vor, so dass eine Trainingsphase zur Anpassung des Spracherkennungssystems des Haushaltgerätes an den Bediener entfällt. Das Haushaltgerät ist also sofort einsatzbereit. Ebenso ist es möglich, dass die Spracherkennung in der Lautbestimmungseinheit 28 sprecherabhängig vorgenommen wird, d. h. der Bediener muss anfänglich und einmalig ein Training durchführen, bei dem er in vorgegebener Reihenfolge vorgegebene Kommandos einspricht, und die Wellenformen des Sprachsignals in Zusammenhang mit den jeweiligen Kommandos abgespeichert werden. Dieser Vorgang ist aufwendiger als bei einem sprecherunabhängigen System, jedoch ist die Erkennungsgenauigkeit höher, bezogen auf den Bediener, der das Training durchgeführt hat.

Die Lippen-Lautbestimmungseinheit 30 verfügt über eine Zuordnungsliste, mittels derer einer bestimmten Lippenbewegung eindeutig ein Laut zugeordnet ist. Das Signal der Lippenbewegung-Erfassungseinheit 24 wird in entsprechender Weise verarbeitet, und ein Signal, dass die erkannte Lautfolge repräsentiert, wird ausgegeben.

Die Ausgangssignale der Lautbestimmungseinheiten 28 und 30 werden an eine Vergleichereinheit bzw. einen Komparator 32 übermittelt Die Vergleichereinheit 32 vergleicht die von den beiden Lautbestimmungseinheiten 28 und 30 jeweils für sich erkannten Lautfolgen miteinander. Im allgemeinen wird eine Lautbestimmungseinheit 28 oder 30 jeweils nicht nur eine einzige Lautfolge als mögliches Erkennungsergebnis der Vergleichereinheit 32 zuführen, sondern es werden jeweils mehrere Lautfolgen als mögliche Erkennungsergebnisse präsentiert, beispielsweise in Form einer Liste. In einer solchen Liste kann dasjenige Erkennungsergebnis mit der höchsten Wahrscheinlichkeit an erster Stelle stehen, mit der zweithöchsten Wahrscheinlichkeit an zweiter Stelle usw. Die Vergleichereinheit 32 ermittelt aus den Erkennungsergebnissen der beiden Lautbestimmungseinheiten 28 und 30 dann dasjenige Ergebnis mit dem insgesamt höchsten Wahrscheinlichkeitswert. Die Vergleichereinheit 32 erstellt einen Steuerbefehl, der das erkannte Kommando repräsentiert, und stellt diesen am Ausgang der Erkennungseinrichtung 22 als letztendliches Erkennungsergebnis zur Verfügung.

In der Fig. 3b) ist als alternative Ausführungsform der Auswerteeinheit 26-1 der Fig. 3a) eine Einheit 26-2 dargestellt. Hierbei verfügt die Auswerteeinheit 26-2 über eine einzige, gemeinsame Lautbestimmungseinheit 34, in die das Sprachsignal VS sowie das (Lippenbewegung-)Bildsignal PS eingegeben werden. Als Ausgabe dieser Einheit 34 wird lediglich eine einzige Lautfolge ausgegeben.

Bei dieser Ausführungsform kann die Erkennungsgenauigkeit gegenüber einer Einrichtung, die lediglich eine reine Spracherkennungsfunktionalität aufweist, dadurch erhöht werden, dass beispielsweise das Lippenbewegung-Signal PS dahingehend analysiert wird, ob mit hoher Wahrscheinlichkeit ein Vokal, wie etwa "a" oder "o" ausgesprochen wurde. Gespeicherte akustische Wellenformen, die mit dem Sprachsignal VS verglichen werden, können dann in entsprechender Weise klassifiziert werden. Werden, wie in diesem Beispiel, einzelne Laute (Vokale etc.) erkannt, können diese, wie in Fig. 3b) dargestellt, zunächst in einem Zwischenspeicher oder Puffer 36 zwischengespeichert werden, bis eine Lautfolge erkannt worden ist, die ein vollständiges Kommando CMD repräsentiert (die entsprechende Verarbeitung der im Puffer 36 zwischengespeicherten Laute ist nicht dargestellt). Dem Fachmann ist offensichtlich, dass ein solcher Puffer 36 selbstverständlich auch in der Auswerteeinheit 26-1 der Fig. 3a) zur Anwendung kommen kann. Alternativ kann die Lautbestimmungseinheit 34 der Auswerteeinheit 26-2 oder 26-1 mehrere aufeinanderfolgende Lippenbewegung-Signale PS zwischenspeichern, wobei die mit dem Sprachsignal VS zu vergleichenden, abgespeicherten Wellenformen nicht einzelne Laute repräsentieren, sondern Lautfolgen, beispielsweise Phoneme. In anderen Ausführungsformen (nicht dargestellt) der Auswerteeinheit 26 (26-1 und 26-2) werden zwar Phoneme in der Lautbestimmungseinheit 34 erkannt, jedoch stellen die einzelnen Phoneme noch kein vollständiges Kommando CMD dar. Dann ist ebenfalls ein Puffer 36 erforderlich.

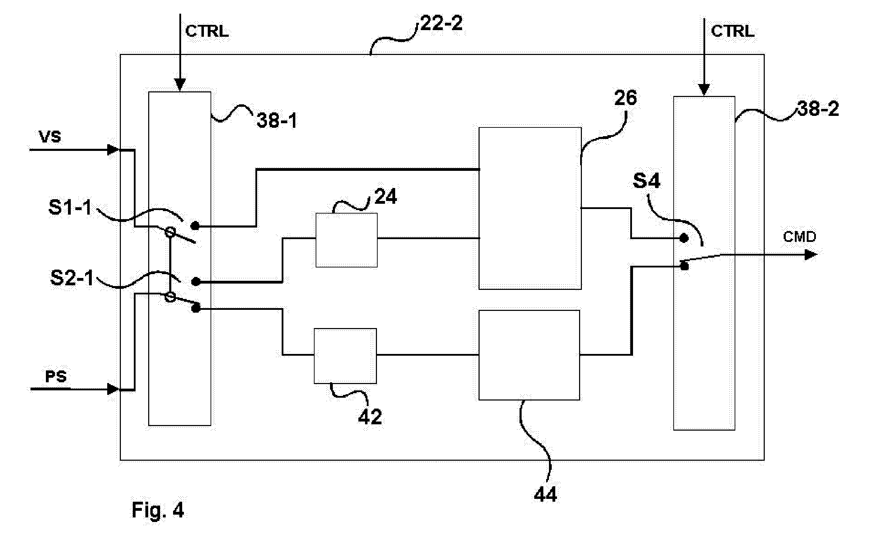

In der Fig. 4 ist eine weitere Ausführungsform 22-2 einer Erkennungseinrichtung eines erfindungsgemäßen Haushaltgerätes (vgl. Fig. 1) dargestellt. Die Erkennungseinrichtung 22 verfügt wie das in der Fig. 3 dargestellte über eine Lippenbewegung-Erfassungseinheit 24 zur Verarbeitung des Bildsignals PS sowie eine Auswerteeinheit 26 zur Verarbeitung des Sprachsignals VS sowie des Lippenbewegung-Signals, dass die Ausgabe der Lippenbewegung-Erfassungseinheit 24 darstellt. Die Auswerteeinheit 26 kann intern ausgebildet sein, wie in der Fig. 3a) (Bezugszeichen 26-1) oder wie in der Fig. 3b) (26-2) dargestellt.

Weiterhin verfügt die Erkennungseinrichtung 22-2 über zwei interne Steuereinheiten, nämlich die eingansseitige Erkennungssteuereinheit 38-1 und die ausgangsseitige Erkennungssteuereinheit 38-2, deren Funktion unten detailliert beschrieben wird. Weiterhin verfügt die Erkennungseinrichtung 22-2 über eine Mimik-Bestimmungseinheit 42 und eine Mimik-Auswerteeinheit 44.

In der eingangsseitigen Erkennungssteuereinheit 38-1 wird das Bildsignal PS alternativ entweder der Lippenbewegung-Erfassungseinheit 24 oder aber der Mimik-Erfassungseinheit 42 zugeleitet. Hierzu kann die eingangsseitige Erkennungssteuereinheit 38-1 von der zentralen Steuerung (vgl. die Einheit mit dem Bezugszeichen 14 in Fig. 1) mittels Steuerbefehlen CTRL gesteuert werden. Wird das Bildsignal PS der Mimik-Bestimmungseinheit 42 zugeleitet, wie in Fig. 4 dargestellt, identifiziert diese in dem Bildsignal PS, dass beispielsweise ein Bild des Kopfbereiches des Bedieners repräsentiert, markante Punkte im Gesicht, beispielsweise die Augen, und bestimmt hierdurch etwa die Kopfstellung des Bedieners. Ein entsprechendes Ausgabesignal, dass die erkannte Kopfstellung repräsentiert, wird der Mimik-Auswerteeinheit 44 eingegeben.

Die Mimik-Auswerteeinheit 44 kann beispielsweise so arbeiten, dass eine zeitliche Abfolge von Signalen der Mimik-Erfassungseinheit 42 zwischengespeichert wird (nicht gezeigt). Aus der Abfolge dieser Signale kann die Mimik-Auswerteeinheit 44 bestimmen, ob der Bediener etwa den Kopf schüttelt oder mit dem Kopf nickt. Nach dieser Auswertung des Bildsignals PS (das aus einer Folge von Signalen bestehen kann, die eine zeitliche Abfolge von Einzelbildern repräsentiert), erzeugt die Mimik- Auswerteeinheit 44 ein entsprechendes Ausgangssignal, nämlich einen Steuerbefehl. Dieser wird der ausgangsseitigen Erkennungssteuereinheit 38-2 übermittelt. Die ausgangsseitige Erkennungssteuereinheit 38-2 kann in gleicher Weise aufgebaut sein wie die eingangsseitige Erkennungssteuereinheit 38-1. Insbesondere kann die Steuereinheit 38-2 über einen (logischen) Schalter S4 verfügen, der entweder das Ausgangssignal der Sprach-Lippe-Auswerteeinheit 26 oder aber das Ausgabesignal der Mimik-Auswerteeinheit 44 an den Ausgang der Erkennungseinrichtung 22-2 legt.

Die Erkennungseinrichtung 22-2 kann auf verschiedene Weise betrieben werden, d. h. durch die zentrale Steuerung (vgl. Fig. 1, Bezugszeichen 14) angesteuert werden. Beispielsweise kann der Schalter S1-1 geschlossen sein und Schalter S2-1 vermittelt das Bildsignal PS an die Lippenbewegung-Erfassungseinheit 24 (Schalter S1-1 und S2-1 sind miteinander gekoppelt, so dass stets eine kombinierte Sprach- und Lippenerkennung erfolgt). Das Erkennungsergebnis wird über die entsprechende Stellung des Schalters S4 als Steuerbefehl an die zentrale Steuerung gegeben.

Unmittelbar im Anschluss an ein in dieser Weise erkanntes Kommando kann die zentrale Steuerung 14 das Kommando auf der Anzeige 16 anzeigen, vgl. Fig. 1. Gleichzeitig steuert die zentrale Steuerung 14 die Erkennungssteuereinheiten 38-1 und -2 der Erkennungseinrichtung 22-2 so, dass der Schalter S1-1 geöffnet wird, d. h. die Spracherkennung deaktiviert wird, und das Bildsignal PS über den entsprechend positionierten Schalter S2-1 der Mimik-Erkennungseinheit 42 zugeleitet wird. Entsprechend gibt auch der Schalter S4 in der ausgangsseitigen Erkennungssteuereinheit 38-1 das von der Mimik-Erkennungseinheit 42 erkannte Kommando CMD an die zentrale Steuerung weiter. Hierdurch ist es möglich, dass das auf der Anzeige 16 angezeigte Kommando beispielsweise durch ein Kopfschütteln oder ein Kopfnicken des Bedieners verworfen oder bestätigt werden kann.

Zur Aufnahme des Bildsignals PS, das innerhalb der Erkennungseinrichtung 22-2 der Fig. 4 entweder zur Lippenbewegungsbestimmung oder zur Mimik-Erkennung verwendet werden kann, genügt eine einzige Kamera 18 (siehe Fig. 1), die den Gesichtsbereich des Bedieners abbildet. Es ist dem Fachmann offensichtlich, dass die in der Fig. 4 gezeigten Schalter S1-1, S2-1 und S4 in Software ausgeführt sein können. Dies gilt generell für die Steuereinheiten 38, und die Einheiten 42, 44, 24, 26.

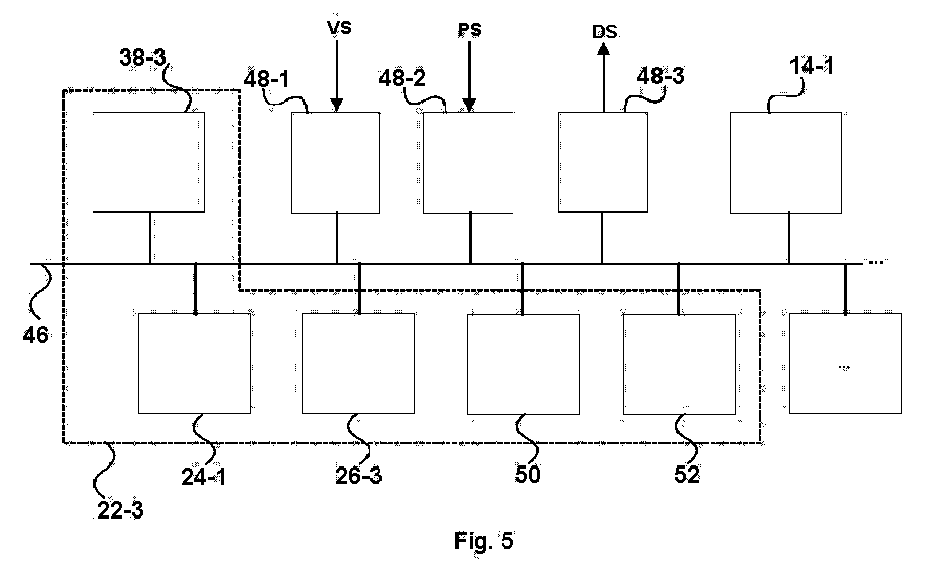

In der Fig. 5 sind als weitere Ausführungsform eines erfindungsgemäßen Haushaltgerätes dessen interne Funktionsblöcke schematisiert dargestellt. Im Unterschied zu den in den Fig. 1, 3 und 4 gezeigten Architekturen erfolgt die Kommunikation der funktionalen Einheiten untereinander über ein Bussystem 46. Mit dem Bus 46 ist eine zentrale Steuerung 14-1 verbunden, die über den Bus die weiteren Einheiten steuert. Ferner liegen Eingabe/Ausgabeeinheiten 48 zur Eingabe es Sprachsignals VS und des Bildsignals PS (Einheiten 48-1, -2) über das Bussystem an weitere Einheiten vor, sowie zur Ausgabe (Einheit 48-3) eines Anzeigesignals DS an die Anzeige 16 (nicht gezeigt, s. Fig. 1).

Eine Erkennungseinrichtung 22-3 ist in Fig. 5 als logische Einheit durch eine gestrichelte Linie gezeichnet. Die Untereinheiten der Erkennungseinrichtung 22-3 liegen als einzelne Module vor, die jeweils für sich mit dem Bussystem 46 verbunden sind. Statt einer eingangs- und einer ausgangsseitigen Erkennungssteuereinheit, wie in Fig. 4 dargestellt, liegt in der in der Fig. 5 gezeigten Ausführungsform eine einzelne Erkennungssteuereinheit 38-3 vor.

Die Funktionen der Lippenbewegung-Erfassungseinheit 24-1 und der Auswerteeinheit 26-3 für die Spracherkennung / das Lippenlesen sind, bis auf die Anpassung an das Bussystem 46, in ihren Funktionalitäten wie die entsprechenden Einheiten in der Fig. 3 aufgebaut. Weiterhin liegt eine Gesten-Erfassungseinheit 50 sowie eine Gesten-Auswerteeinheit 52 vor. Weitere Einheiten können am Bussystem 46 angeschlossen sein, beispielsweise eine Mimik-Bestimmungseinheit und Mimik-Auswerteeinheit entsprechend den in Fig. 4 gezeigten Einheiten.

Die zentrale Steuerung 14 aktiviert bzw. deaktiviert (im Sinne der in den Fig. 2 und 4 dargestellten, logischen Schalter) die Erfassungs- bzw. Auswerteeinheiten zur Verarbeitung der Eingangssignale. Ein über die Eingabeeinheit für das Bildsignal 48-2 eingegebenes Bildsignal PS kann beispielsweise an die Lippenbewegung-Erfassungseinheit 24-1 geleitet werden, sofern dieses zur Verarbeitung des Bildsignals PS aktiviert worden ist. Als Ergebnis der Bestimmung der Lippenposition in dem Bild, dass durch das Bildsignal PS repräsentiert wird, gibt die Erfassungseinheit 24-1 ein internes Signal auf den Bus 46 aus, dass von der ebenfalls durch die zentrale Steuerung 14 aktivierten Auswerteeinheit 26-3 für die Lippenbewegungs- und Spracherkennung empfangen wird.

Ein über die Eingabeeinheit für das Sprachsignal 48-1 eingegebenes Sprachsignal VS wird ebenfalls von der Auswerteeinheit für die Lippenbewegungs- und Spracherkennung 26-1 empfangen. Die aus der Spracherkennungs- und Lippenbewegungsbestimmung sich ergebende Lautfolge entspricht einem bestimmten Kommando, für das ein Steuerbefehl von der Auswerteeinheit 26-3 auf das Bussystem 46 ausgegeben und von der zentralen Steuerung 14 empfangen wird. Die zentrale Steuerung 14 gibt in Reaktion auf den empfangenen Steuerbefehl ein Anzeigesignal DS über die Ausgabeeinheit für die Anzeige 48-3 auf die Anzeige 16 (siehe Fig. 1) aus, die das erkannte Kommando repräsentiert.

Bei der in Fig. 5 dargestellten Ausführungsform eines erfindungsgemäßen Haushaltgerätes ist statt einer Eingabe über gesprochene Kommandos auch eine Eingabe über Gesten möglich, beispielsweise basierend auf einer Taubstummensprache. Hierzu deaktiviert die zentrale Steuerung 14 die Module 24-1 und 26-3 zur kombinierten Spracherkennung und zum Lippenlesen und aktiviert die Einheiten bzw. Module für die Gestenerfassung 50 und Gestenauswertung 52.

Ein über die Eingabeeinheit 48-2 eingehendes Bildsignal PS gelangt somit an die Gesten-Bestimmungseinheit 50, in der die Position und Haltung einer Hand bzw. der Finger einer Hand des Bedieners identifiziert werden. Das Bildsignal PS kann entweder von einer einzigen Kamera (siehe Fig. 1) stammen, mit der alternativ oder in Ergänzung Bilder des Kopfbereiches eines Bedieners aufgenommen werden, oder kann von einer weiteren Kamera stammen, die sich in Brust- oder Hüfthöhe eines Bedieners befindet, am Haushaltgerät angebracht oder aber von diesem abgesetzt.

Ein Signal, welches die erkannte Handhaltung bzw. die Positionierung der Finger der Hand im Raum repräsentiert, wird von der Gesten-Erfassungseinheit 50 auf das Bussystem 46 ausgegeben. Die aktivierte Gesten-Auswerteeinheit 52 empfängt dieses Signal und interpretiert die dadurch repräsentierte Handhaltung im Rahmen einer Taubstummensprache, indem einer bestimmten Geste ein zu dieser in Zuordnung abgespeicherter Steuerbefehl ermittelt wird. Dieser wird von der Gesten-Auswerteeinheit 52 auf das Bussystem 46 ausgegeben und von der zentralen Steuerung 14 empfangen. Die Gestenerkennung kann alternativ zur Spracherkennung/zum Lippenlesen stattfinden oder auch in Ergänzung hierzu. So ist es denkbar, die Erkennung von Gesten anstelle der Erkennung der Mimik eines Bedieners zur Bestätigung eines bekannten Kommandos einzusetzen, alternativ zu der anhand der Fig. 4 geschilderten Ausführungsform. Ein solches System kann beispielsweise für Personen mit teilweiser oder vollständiger Lähmung der Nerven im Gesichtsbereich eine erleichterte Bedienung gewährleisten. Ebenso kann die Gestenerkennung auch etwa zum Einschalten einer Erkennung mittels Lippenlesen und/oder Sprache verwendet werden.

Die Erfindung ist nicht auf die hier geschilderten Ausführungsbeispiele und die darin hervorgehobenen Aspekte beschränkt, sondern im Rahmen der anhängenden Ansprüche ebenso in einer Vielzahl von Abwandlungen möglich, die im Rahmen fachgemäßen Handelns liegen.

So ist es beispielsweise denkbar, die Mimikerkennung, wie anhand der funktionalen Einheiten 42 und 44 des in der Fig. 4 gezeigten Ausführungsbeispiels geschildert, auf eine Gesichtserkennung auszuweiten, um hierdurch zur Bedienung eines Haushaltgerätes autorisierte Bediener zu erkennen und zu autorisieren. Ein derartiges Autorisierungsverfahren ist beispielsweise als Kindersicherungsmechanismus denkbar. In diesem Falle wäre die Mimikerkennung der Gestenerkennung und/oder Spracherkennung und/oder dem Lippenablesen vorgeschaltet.

### Bezugszeichenliste

- 10: Funktionseinrichtung
- 12: Bedienelemente
- 14: zentrale Steuerung
- 16: Anzeigefeld
- 18: Kamera bzw. Bilderfassungseinrichtung
- 20: Mikrofon bzw. Spracheingabeeinrichtung
- 22: Erkennungseinrichtung
- 24: Lippenbewegung-Erfassungseinheit
- 26: Auswerteeinheit für die Spracherkennung/Lippenlesen
- 28: Sprach-Lautbestimmungseinheit
- 30: Lippen-Lautbestimmungseinheit
- 32: Vergleichereinheit
- 34: gemeinsame Lautbestimmungseinheit für Sprache/Lippe
- 36: Zwischenspeicher
- 38: (eingangs-/ausgangsseitige) Erkennungs-Steuereinheit
- 42: Mimik-Erfassungseinheit
- 44: Mimik-Auswerteeinheit
- 46: zentraler Bus
- 48: Ein-/Ausgabeeinheiten
- 50: Gesten-Erfassungseinheit
- 52: Gesten-Auswerteeinheit
- CMD: Kommando
- CTRL: Steuerbefehl
- DS: Anzeigesignal
- GR: Gestenerkennung
- LR1, LR2: Lippenlesen
- MR: Mimikerkennung
- PS, PS': Bildsignal
- S1 - S4: funktionale Umschalter
- SR: Spracherkennung
- VS: Sprachsignal

## Patentansprüche

1. Haushaltgerät mit einer Funktionseinrichtung (10), mit einer Steuerungseinrichtung (14), welche Steuerbefehle entgegennimmt und dementsprechend die Funktionseinrichtung (10) steuert, und mit einer Bilderfassungseinrichtung (18) zum Erzeugen eines Bildsignals (PS), das ein Bild eines Bedieners oder eines Ausschnitts davon repräsentiert, **dadurch gekennzeichnet, dass** das Haushaltgerät eine Erkennungseinrichtung (22) zur Auswertung des Bildsignals (PS) aufweist, die aus dem Bildsignal (PS) eine vom Bediener gesprochene Lautfolge erkennt und einen Steuerbefehl bestimmt, welcher die erkannte Lautfolge repräsentiert, und dass die Erkennungseinrichtung (22) den Steuerbefehl an die Steuerungseinrichtung (14) ausgibt.

2. Haushaltgerät nach Anspruch 1, **dadurch gekennzeichnet, dass** die Erkennungseinrichtung (22-1, -2, -3) eine Lippenbewegung-Erfassungseinheit (24) zur Auswertung des Bildsignals (PS) aufweist, die eine Lippenposition sowie eine Lippenbewegung des Bedieners erfasst, und dass die Erkennungseinrichtung (22-1, -2, -3) eine Auswerteeinheit (26-1, -2, -3) aufweist, die eine Lautfolge aufgrund der Lippenbewegung bestimmt.

3. Haushaltgerät nach Anspruch 1 oder 2, **dadurch gekennzeichnet, dass** das Haushaltgerät eine Spracheingabeeinrichtung (20) zur Eingabe eines Sprachsignals (VS) eines Bedieners aufweist, dass die Erkennungseinrichtung (22) zur Auswertung des Sprachsignals (VS) ausgebildet ist und aus dem Sprachsignal (VS) und dem Bildsignal (PS) eine Lautfolge bestimmt, die der vom Bediener gesprochenen Lautfolge wenigstens nahe kommt.

4. Haushaltgerät nach Anspruch 3, **dadurch gekennzeichnet, dass** die Erkennungseinrichtung (22) eine Auswerteeinheit (26-1) mit einer Sprach-Lautbestimmungseinheit (28) zur Auswertung des Sprachsignals (VS) aufweist, die aus dem Sprachsignal (VS) eine erste Lautfolge bestimmt, dass die Auswerteeinheit (26-1) eine Lippen-Lautbestimmungseinheit (30) zur Verarbeitung der Lippenbewegung aufweist, die aus der Lippenbewegung eine zweite Lautfolge bestimmt, und dass die Auswerteeinheit (26-1) eine Vergleichereinheit (32) aufweist, welche zur Bestimmung des Steuerbefehls die erste und die zweite Lautfolge vergleichend auswertet.

5. Haushaltgerät nach Anspruch 3, **dadurch gekennzeichnet, dass** die Erkennungseinrichtung (22) eine Auswerteeinheit (26-2) mit einer gemeinsamen Lautbestimmungseinheit (34) zur Verarbeitung des Sprachsignals (VS) und der Lippenbewegung aufweist, die aus dem Sprachsignal (VS) und der Lippenbewegung eine Lautfolge bestimmt.

6. Haushaltgerät nach einem der vorhergehenden Ansprüche, **dadurch gekennzeichnet, dass** die Erkennungseinrichtung (22-3) eine Gesten-Erfassungseinheit (50) zur Auswertung des Bildsignals (PS) aufweist, die eine Geste eines Bedieners erfasst.

7. Haushaltgerät nach Anspruch 6, **dadurch gekennzeichnet, dass** die Erkennungseinrichtung (22-3) eine Gesten-Auswerteeinheit (52) aufweist, die aus der erfassten Geste einen zweiten Steuerbefehl bestimmt.

8. Haushaltgerät nach einem der vorhergehenden Ansprüche, **dadurch gekennzeichnet, dass** das Haushaltgerät ein Ausgabegerät, insbesondere ein Anzeigefeld (16), zur Ausgabe des Steuerbefehls aufweist.

9. Haushaltgerät nach Anspruch 8, **dadurch gekennzeichnet, dass** das Haushaltgerät eine Bestätigungseinrichtung zur Bestätigung und/oder Ablehnung des ausgegebenen Steuerbefehls durch den Bediener aufweist.

10. Haushaltgerät nach einem der vorhergehenden Ansprüche, **dadurch gekennzeichnet, dass** die Erkennungseinrichtung (22-2) eine Mimik-Erfassungseinheit (42) zur Auswertung des Bildsignals (PS) aufweist, die eine Kopfhaltung und/oder Miene des Bedieners erfasst.

11. Haushaltgerät nach Anspruch 10, **dadurch gekennzeichnet, dass** die Erkennungseinrichtung (22-2) eine Mimik-Auswerteeinheit (44) aufweist, die aus der erfassten Kopfhaltung und/oder Miene einen dritten Steuerbefehl bestimmt.

12. Haushaltgerät mit einer Funktionseinrichtung (10), mit einer Steuerungseinrichtung (14), welche Steuerbefehle entgegennimmt und dementsprechend die Funktionseinrichtung (10) steuert, und mit einer Bilderfassungseinrichtung (18) zum Erzeugen eines Bildsignals (PS), das ein Bild eines Bedieners oder eines Ausschnitts davon repräsentiert, **dadurch gekennzeichnet, dass** das Haushaltgerät eine Erkennungseinrichtung (22) zur Auswertung des Bildsignals (PS, PS') aufweist, die aus dem Bildsignal (PS, PS') eine vom Bediener durchgeführte Geste und/oder eine Kopfhaltung und/oder eine Miene des Bedieners erkennt, dass die Erkennungseinrichtung (22) einen Steuerbefehl bestimmt, welcher die Geste und/oder die Kopfhaltung und/oder die Miene des Bedieners repräsentiert, und dass die Erkennungseinrichtung (22) den Steuerbefehl an die Steuerungseinrichtung (14) ausgibt.

13. Verfahren zur Steuerung eines Haushaltgerätes nach einem der vorhergehenden Ansprüche, bei dem ein Bildsignal (PS) erzeugt wird, das ein Bild eines Bedieners oder eines Ausschnitts davon repräsentiert, **dadurch gekennzeichnet, dass** aus dem Bildsignal (PS) eine vom Bediener gesprochene Lautfolge erkannt wird, dass ein die Lautfolge repräsentierender erster Steuerbefehl bestimmt wird und dass der erste Steuerbefehl zur Steuerung einer Funktionseinrichtung (10) des Haushaltgerätes verwendet wird.

14. Verfahren nach Anspruch 13, **dadurch gekennzeichnet, dass** aus dem Bildsignal (PS) die Lippenposition sowie die Lippenbewegung des Bedieners erfasst wird und dass aus der Lippenbewegung eine Lautfolge erkannt wird.

15. Verfahren nach Anspruch 13 oder 14, **dadurch gekennzeichnet, dass** ein Sprachsignal (VS) erfasst wird und dass das Sprachsignal (VS) und das Bildsignal (PS) ausgewertet werden, so dass eine vom Bediener gesprochene Lautfolge erkannt wird.

16. Verfahren nach einem der Ansprüche 13 bis 15, **dadurch gekennzeichnet, dass** ein aus dem ersten Steuerbefehl resultierendes Erkennungsergebnis dem Bediener angezeigt wird.

17. Verfahren nach Anspruch 16, **dadurch gekennzeichnet, dass** das Erkennungsergebnis durch Betätigen einer Bestätigungseinrichtung bestätigt oder abgelehnt werden kann.

18. Verfahren nach einem der Ansprüche 13 bis 17, **dadurch gekennzeichnet, dass** das Bildsignal (PS') verarbeitet wird, dass aus dem Bildsignal (PS') eine Kopfhaltung und/oder eine Miene des Bedieners erfasst wird, dass ein die Kopfhaltung und/oder Miene repräsentierender zweiter Steuerbefehl bestimmt wird und dass der zweite Steuerbefehl zur Steuerung der Funktionseinrichtung (10) des Haushaltgerätes verwendet wird.

19. Verfahren nach Anspruch 18, **dadurch gekennzeichnet, dass** der erste Steuerbefehl zur Steuerung der Funktionseinheit (10) verwendet wird, nachdem das resultierende Erkennungsergebnis dem Bediener angezeigt und der zweite Steuerbefehl erkannt worden ist, und der zweite Steuerbefehl dahingehend ausgewertet wurde, dass er mit dem ersten Steuerbefehl übereinstimmt.

20. Verfahren zur Steuerung eines Haushaltgerätes nach einem der Ansprüche 6 bis 12, bei dem Bildsignale (PS) erzeugt werden, die jeweils ein Bild eines Bedieners repräsentieren, **dadurch gekennzeichnet, dass**
a) ein erstes Bildsignal (PS) verarbeitet wird, aus dem eine Geste des Bedieners erfasst wird,
b) ein die Geste repräsentierender erster Steuerbefehl bestimmt wird,
c) ein zweites Bildsignal (PS') verarbeitet wird, aus dem eine Kopfhaltung und/oder eine Miene des Bedieners erfasst wird,
d) ein die erfasste Kopfhaltung und/oder Miene repräsentierender zweiter Steuerbefehl bestimmt wird und
e) der erste und der zweite Steuerbefehl zur Steuerung des Haushaltgerätes verwendet werden.
